# EUROPÄISCHE PATENTSCHRIFT

(11) **EP 3 377 424 B1**
(45) Veröffentlichungstag und Bekanntmachung des Hinweises auf die Patenterteilung: **15.01.2020**
(21) Anmeldenummer: 16794203.6
(22) Anmeldetag: 14.10.2016
(51) Int. Cl.: E05F 1/10, E05F 15/53, B65D 88/12, B60J 5/04

(54) **TRANSPORTBEHÄLTER**
TRANSPORT CONTAINER
CONTENANT DE TRANSPORT

(30) Priorität: 19.11.2015 AT 509842015
(43) Veröffentlichungstag der Anmeldung: 26.09.2018
(73) Patentinhaber: Strasser, Johann Sen, 5301 Eugendorf (AT); Kalkhofer, Wolfgang, 5023 Salzburg (AT)
(72) Erfinder: STRASSER, Johann, Jun., 5301 Eugendorf (AT); STRASSER, Wolfgang, 5301 Eugendorf (AT); STRASSER, Johann, Sen., 5301 Eugendorf (AT); KALKHOFER, Wolfgang, 5301 Eugendorf (AT)
(74) Vertreter: Limbeck, Achim
(86) Internationale Anmeldenummer: PCT/AT2016/060075
(87) Internationale Veröffentlichungsnummer: WO 2017/083895

(56) Entgegenhaltungen:
- EP-A1- 2 810 898
- DE-A1-102010 051 428
- DE-U1- 20 022 677
- US-A1- 2003 127 876

## Beschreibung

Die Erfindung betrifft einen Transportbehälter, insbesondere Fahrzeugaufbau oder Container, mit einem einen Transportraum einschließenden Rahmenaufbau, mit einer mit dem Rahmenaufbau verbundenen Wandeinheit, welche eine Seitenwand aufweist, und mit einer Öffnungseinrichtung zum Überführen der Wandeinheit zwischen einer am Rahmenaufbau anliegenden Schließstellung, in welcher eine seitliche Ladeöffnung des Rahmenaufbaus durch die Seitenwand verschlossen ist, und einer die seitliche Ladeöffnung freigebenden Offenstellung, wobei die Öffnungseinrichtung einen gelenkig mit der Wandeinheit verbundenen Hubarm aufweist.

Ein solcher Transportbehälter ist insbesondere aus der AT 509 550 B1 bekannt. Bei diesem Transportbehälter ist ein L-förmiger Lenker bzw. Hubarm vorgesehen, um die Seitenwand des Transportbehälters von der Schließ- in die Offenstellung zu führen. Der längere Schenkel des L-Lenkers ist an der Seitenwand schwenkbar gelagert, wohingegen der kürzere Schenkel des L-Lenkers an dem Rahmen des Transportbehälters angelenkt ist. Zur Unterstützung des Öffnungsvorgangs ist ein Linearantrieb vorgesehen, welcher im Scheitelbereich des L-förmigen Lenkers angreift. Diese Kinematik hat sich grundsätzlich sehr bewährt. Nachteiligerweise kann der Lenker bei der Überführung in die Offenstellung jedoch lediglich einen Winkel von im Wesentlichen 180° überstreichen.

Die EP 2 810 898 A1 offenbart einen gattungsgemäßen Transportbehälter, bei welchem eine Verschwenkvorrichtung zur Verschwenkung einer Seitenwand um einen Rahmenaufbau vorgesehen ist. Die Verschwenkvorrichtung weist ein Hubarmelement und eine Antriebseinheit auf. Zwischen dem Rahmenaufbau und dem Hubarmelement ist ein Anlenkelement vorgesehen, welches einerseits gelenkig mit dem Hubarmelement und andererseits gelenkig mit dem Rahmenaufbau verbunden ist. Die Antriebseinheit weist einen Linearantrieb auf, welcher über ein Kraftübertragungselement ein Drehmoment auf das Hubarmelement überträgt. Zu diesem Zweck ist das eine Ende des Kraftübertragungselements mit dem Hubarmelement und das andere Ende des Kraftübertragungselements mit dem Linearantrieb verbunden.

Aus der US 2003/0127876 A1 ist ein Fahrzeugaufbau mit einer zweiteiligen Seitenwand bekannt, welche in eine Offenstellung nach oben geschwenkt werden kann. Hierfür ist ein Linearantrieb vorgesehen, welcher an einem gekrümmten Schwenkarm angreift, der am einen Ende mit der Seitenwand verbunden ist. Am anderen Ende des gekrümmten Schwenkarms ist ein Verbindungsarm vorgesehen, welcher am Fahrzeugaufbau angelenkt ist. Aus der DE102010051428A1 ist eine Vorrichtung zum Bewegen einer Wand eines Transportbehälters bekannt, insbesondere eines Fahrzeugaufbaus oder Containers, wobei die Vorrichtung zwischen einer Schließstellung und einer Offenstellung eine zwei- oder mehrteilige Wand aufweist, die ein oberes Wandteil, das mit einem Schwenkantrieb zum Verschwenken des oberen Wandteiles um eine erste Drehachse in Wirkungsverbindung steht, und ein unteres Wandteil aufweist, das mit dem der ersten Drehachse abgewandten Ende des oberen Wandteiles um eine zu der ersten Drehachse parallele oder annähernd parallele zweite Drehachse verschwenkbar verbunden ist. Aus der DE20022677U1 ist ein Wechselbehälter für den Gütertransport bekannt, der einen Boden, zwei Stirnwände, ein Dach und zwei Seitenwände aufweist, und bei dem mindestens eine Seitenwandmittels zweier Paare von Schwenkarmen, deren ersten Paar am vorderen Ende der Seitenwand und deren zweites Paar im hinteren Ende der Seitenwand angreift, aus einer Geschlossen-Stellung in eine Offen-Stellung bewegt werden kann, derart, dass der Wechselbehälter in der Offen-Stellung der Seitenwand von der Seite her zugänglich ist, und bei dem den Schwenkarmen zumindest ein Antrieb zugeordnet ist.

Demnach stellt sich die Erfindung der Aufgabe, die Nachteile des Standes der Technik zu beseitigen bzw. zu lindern. Die Erfindung hat daher insbesondere zum Ziel, einen Transportbehälter der eingangs angeführten Art dahingehend weiterzuentwickeln, dass die Seitenwand bei der Überführung in die Offenstellung mit konstruktiv einfachen Mitteln um einen größeren Schwenkwinkel verschwenkt werden kann. Die Aufgabe wird mit einem Transportbehälter gemäß Anspruch gelöst.

Erfindungsgemäß ist der Hubarm über zwei Schwenkarme mit dem Rahmenaufbau verbunden, wobei Gelenke zwischen den Schwenkarmen und dem Hubarm und Gelenke zwischen den Schwenkarmen und dem Rahmenaufbau vorgesehen sind, wobei die Gelenke zwischen den Schwenkarmen und dem Hubarm und die Gelenke zwischen den Schwenkarmen und dem Rahmenaufbau jeweils in einem Abstand zueinander angeordnet sind.

Demnach ist der Hubarm bzw. Lenker nicht direkt, sondern über ein Paar von Schwenkarmen am Rahmenaufbau des Transportbehälters angelenkt. Als Hubarm ist insbesondere ein starres, vorzugsweise längenunveränderliches Element vorgesehen, mit welchem während des Öffnungsvorgangs ein Drehmoment auf die Seitenwand übertragen wird. Die einen Enden der Schwenkarme sind über Gelenke mit dem Rahmenaufbau und die anderen Enden der Schwenkarme sind über Gelenke mit dem Hubarm verbunden. Die Gelenke der Schwenkarme auf Seite des Rahmenaufbaus sind während des Öffnungs- bzw. Schließvorgangs bevorzugt ortsfest angeordnet. Die Gelenke der Schwenkarme auf Seite des Hubarms machen die Schwenkbewegung des Hubarms mit. Der Hubarm ist gelenkig mit der Seitenwand, insbesondere mit einem Seitenrand der Seitenwand, verbunden. Durch die Lagerung des Hubarms mittels zweier Schwenkarme wird der Hubarm entlang zweier Öffnungskurven präzise in Richtung der Offenstellung verschwenkt. Vorzugsweise sind genau zwei Schwenkarme zwischen dem Hubarm und dem Rahmenaufbau vorgesehen. Vorteilhafterweise kann der Hubarm zwischen der Schließ- und der Offenstellung um einen im Vergleich zum Stand der Technik größeren Schwenkwinkel von mehr als 180° verschwenkt werden, da die Lagerung des Hubarms über die Schwenkarme eine Kollision des Hubarms mit dem Rahmenaufbau bei einer Verschwenkung von mehr als 180° zuverlässig verhindert. Demnach sind die Schwenkarme dazu eingerichtet, eine Verschwenkung des Hubarms von mehr als 180° freizustellen. Dadurch wird eine besonders platzsparende Anordnung der Seitenwand in der Offenstellung ermöglicht. Die erfindungsgemäße Öffnungseinrichtung zeichnet sich zudem durch eine besonders einfache, teilesparende und wartungsarme Ausgestaltung aus.

Die Gelenkachsen der Gelenke zwischen den Schwenkarmen und dem Rahmenaufbau, die Gelenkachsen zwischen den Schwenkarmen und dem Hubarm und die Gelenkachsen zwischen dem Hubarm und der Seitenwand erstrecken sich vorzugsweise in Längsrichtung des Transportbehälters, welche bei einem Fahrzeugaufbau in Fahrtrichtung bei Geradeausfahrt verläuft.

Bevorzugt ist jeder Schwenkarm durch zwei idente, parallel zueinander angeordnete Schwenkarmteile gebildet, welche mit den gegenüberliegenden Längsseiten des Hubarms gelenkig verbunden sind.

Für die Zwecke dieser Offenbarung beziehen sich die Orts- und Richtungsangaben, wie "seitlich", "vorne", "hinten", "unten", "oben", "horizontal" und "vertikal" auf den bestimmungsgemäßen Gebrauchszustand des Transportbehälters.

Erfindungsgemäß sind die Gelenke zwischen den Schwenkarmen und dem Rahmenaufbau im Wesentlichen in horizontaler Richtung, senkrecht zu deren Gelenkachsen voneinander beabstandet, wobei die Gelenke zwischen den Schwenkarmen und dem Rahmenaufbau vorzugsweise im Wesentlichen in derselben horizontalen Ebene angeordnet sind. Die Gelenke der Schwenkarme sind auf Seite des Rahmenaufbaus im Wesentlichen in Querrichtung, d.h. in Richtung senkrecht zur Längsrichtung des Rahmenaufbaus, in einem Abstand zueinander angeordnet. Somit werden die Gelenke der Schwenkarme auf Seite des Hubarms während der Überführung der Wandeinheit von der Schließ- in die Offenstellung entlang zweier verschiedener Kurvenbahnen, insbesondere Kreisbahnen, verschwenkt. Dabei wird der Endbereich des Hubarms auf Seite des Rahmenaufbaus mittels der Schwenkarme abschnittsweise vom Dachbereich abgehoben. Dadurch kann erreicht werden, dass der Hubarm ausgehend von der Schließstellung um einen Winkel von mehr als 180° in die Offenstellung der Wandeinheit verschwenkbar ist.

Zur Anlenkung des Hubarms ist es günstig, wenn die Gelenke zwischen den Schwenkarmen und dem Rahmenaufbau an einem Dachbereich des Rahmenaufbaus angeordnet sind. Demnach sind die Schwenkarme im oberen Bereich des Rahmenaufbaus an diesem angelenkt.

Um eine sichere Führung des Hubarms zwischen der Schließstellung und der Offenstellung zu gewährleisten, sind die Gelenke zwischen den Schwenkarmen und dem Hubarm und die Gelenke zwischen den Schwenkarmen und dem Rahmenaufbau derart angeordnet, dass die Schwenkarme bei der Überführung der Wandeinheit von der Schließstellung in die Offenstellung abschnittsweise über Kreuz angeordnet sind. Es kreuzen sich die Schwenkarme zumindest während eines Abschnitts des Öffnungs- bzw. Schließvorgangs der Wandeinheit.

Die Schwenkarme können annähernd dieselbe Länge aufweisen. Die Länge bezieht sich hierbei jeweils auf den Abstand zwischen dem Gelenk am Rahmenaufbau und dem Gelenk am Hubarm jedes Schwenkarms. Zudem können die Gelenke zwischen den Schwenkarmen und dem Hubarm einerseits und die Gelenke zwischen den Schwenkarmen und dem Rahmenaufbau andererseits annähernd in dem selben Abstand zueinander angeordnet sein.

Zur Erzielung eines vergleichsweise großen Öffnungswinkels der Seitenwand ist es günstig, wenn der Hubarm zwischen der Schließstellung und der Offenstellung der Wandeinheit um einen Winkel von mehr als 225° verschwenkbar ist.

Zur Übertragung von Drehmomenten auf den Hubarm und auf damit verbundene Seitenwand ist es günstig, wenn der Hubarm zwei in einem Winkel, vorzugsweise in einem spitzen Winkel, zueinander angeordnete Hubarmschenkel aufweist. Bei dieser Ausführungsvariante ist der Hubarm im Wesentlichen L-förmig ausgebildet. Die Hubarmschenkel sind vorzugsweise unbeweglich miteinander verbunden, so dass der Winkel zwischen den Hubarmschenkeln während der Überführung von der Schließ- in die Offenstellung konstant ist. Die Ausbildung des Hubarms mit zwei Hubarmschenkeln ermöglicht eine stabile Anlenkung des Hubarms über die einen Enden der Schwenkarme, welche an den anderen Enden am Rahmenaufbau gelenkig gelagert sind.

Zur Erzielung vorteilhafter Hebelverhältnisse bei der Verschwenkung der Seitenwand ist es günstig, wenn der eine Hubarmschenkel mit den Schwenkarmen und der andere Hubarmschenkel mit der Wandeinheit, insbesondere mit einem Seitenrand der Seitenwand, verbunden ist, wobei der mit der Wandeinheit verbundene Hubarmschenkel vorzugsweise eine größere Längserstreckung als der mit den Schwenkarmen verbundene Hubarmschenkel aufweist.

Zur Führung des Hubarms zwischen der Schließstellung und der Offenstellung ist der eine Schwenkarm bevorzugt am freien Ende des einen Hubarmschenkels angelenkt, wobei der andere Schwenkarm bevorzugt im Bereich eines die Hubarmschenkel miteinander verbindenden Scheitels des Hubarms angelenkt ist. Bei dieser Ausführung wird das freie Ende des einen Hubarmschenkels mittels des einen Schwenkarms entlang einer ersten Kurvenbahn, insbesondere Kreisbahn, geführt. Der andere Schwenkarm greift im Wesentlichen am Scheitel zwischen den Hubarmschenkeln an, so dass der Scheitel des Hubarms entlang einer zweiten Kurvenbahn, insbesondere Kreisbahn, geführt wird.

Die Kraftübertragung auf die Wandeinheit kann verbessert werden, indem der eine Hubarmschenkel in der Schließstellung der Seitenwand im Wesentlichen parallel zur Haupterstreckungsebene der Seitenwand und der andere Hubarmschenkel im Wesentlichen senkrecht zur Haupterstreckungsebene der Seitenwand angeordnet ist.

Zum selbsttätigen Öffnen bzw. Schließen des Transportbehälters ist es günstig, wenn die Öffnungseinrichtung einen Antrieb, insbesondere einen Linearantrieb, vorzugsweise einen Zylinder-Kolben-Antrieb, zur Drehmomentübertragung auf den Hubarm aufweist.

Hinsichtlich der Kraftübertragung auf den Hubarm ist es günstig, wenn der Antrieb am einen Ende um eines der Gelenke zwischen den Schwenkarmen und dem Hubarm und am anderen Ende um ein Gelenk am Rahmenaufbau gelagert ist. Das Gelenk am Rahmenaufbau ist vorzugsweise ortsfest. Vorzugsweise greift der Antrieb im Bereich des Scheitels des Hubarms an.

Gemäß einer besonders bevorzugten Ausführung ist ein Federelement jeweils mit dem Rahmenaufbau und der Wandeinheit derart verbunden, dass das Federelement in der Schließstellung und/oder in der Offenstellung der Wandeinheit in einem gespannten Zustand vorliegt. Das eine Ende des Federelements kann über ein Gelenk mit dem Rahmenaufbau, das andere Ende des Federelements über ein weiteres Gelenk mit der Wandeinheit, insbesondere mit der Seitenwand, verbunden sein. Durch die Anordnung des Federelements kann das Gewicht der Wandeinheit dazu genutzt werden, das Federelement in der Schließstellung bzw. in der Offenstellung im gespannten Zustand anzuordnen, in welchem Federenergie in dem Federelement gespeichert ist. Zu Beginn des Öffnungsvorgangs bzw. zu Beginn des Schließvorgangs wird das Federelement entlastet, so dass die Federenergie zur Unterstützung des Öffnungs- bzw. Schließvorgangs genutzt werden kann. Besonders bevorzugt ist es, wenn das Federelement sowohl in der Schließstellung als auch in der Offenstellung im gespannten Zustand angeordnet ist. Bei dieser Ausführung wird das Federelement ausgehend von der Schließstellung zunehmend entlastet, bis das Federelement in einer Zwischenstellung der Wandeinheit im entlasteten Zustand vorliegt. Danach wird das Federelement wieder belastet, so dass das Federelement in der Offenstellung der Seitenwand wiederum im gespannten Zustand vorliegt. Durch das Federelement wird während der Überführung von der Schließ- in die Offenstellung und umgekehrt in den Phasen höchster Belastung Federenergie zur Verfügung gestellt. Vorzugsweise ist das Federelement als Druckfeder ausgebildet, welche auf Druck belastet wird. Beispielsweise kann die Druckfeder eine Schraubendruckfeder sein. Im gespannten Zustand ist die Schraubendruckfeder komprimiert.

Wenn der Transportbehälter quaderförmig mit zwei Längsseiten, einer Oberseite, einer Unterseite und gegenüberliegenden Stirnseiten ausgebildet ist, kann das Federelement in einer bevorzugten Ausführung an der einen Stirnseite des Transportbehälters und die zuvor beschriebene Öffnungseinrichtung an der anderen Stirnseite des Transportbehälters angeordnet sein. Im Fall eines Fahrzeugaufbaus ist das Federelement, in Fahrtrichtung gesehen, bevorzugt an der Vorderseite des Rahmenaufbaus angeordnet.

Aus Platzgründen sowie zur Reduktion der beim Öffnungs- bzw. Schließvorgang auftretenden Lasten ist es von Vorteil, wenn die Seitenwand zumindest ein oberes Seitenwandteil und ein unteres Seitenwandteil aufweist, wobei das obere Seitenwandteil über eine Schwenkachse mit dem unteren Seitenwandteil verbunden ist. Die Schwenkachse zwischen dem oberen und unteren Seitenwandteil verläuft vorzugsweise in Längsrichtung des Transportbehälters.

Gemäß einer ersten bevorzugten Ausführungsvariante ist die Seitenwand um eine ortsfeste Gelenkachse am Dachbereich des Rahmenaufbaus schwenkbar gelagert. Bei dieser Ausführung birgt die zuvor erläuterte Führung des Hubarms mittels der Schwenkarme den Vorteil, dass die Seitenwandteile in der Offenstellung oberhalb des Dachbereichs des Rahmenaufbaus in einem spitzen Winkel dazu angeordnet werden können. Bei einer zweiteiligen Ausführung der Seitenwand sind die Seitenwandteile in der Offenstellung in einem zusammengeklappten Zustand oberhalb des Dachbereichs des Rahmenaufbaus angeordnet.

Für die Zwecke dieser Offenbarung sind als "ortsfeste" Schwenk- oder Gelenkachsen solche Achsen zu verstehen, die während des Öffnungs- bzw. Schließvorgangs abgesehen von ihrer Lagerfunktion unbeweglich angeordnet sind.

Gemäß einer alternativen bevorzugten Ausführungsvariante weist die Wandeinheit ein gelenkig mit der Seitenwand verbundenes Dachelement auf, welches in der Schließstellung der Wandeinheit eine Dachöffnung des Rahmenaufbaus abdeckt und die Dachöffnung in der Offenstellung der Wandeinheit freigibt. Bei dieser Ausführung weist die Wandeinheit daher nicht nur eine Seitenwand zur wahlweisen Freigabe einer seitlichen Ladeöffnung, sondern zudem ein Dachelement zur wahlweisen Freigabe einer dachseitigen Ladeöffnung auf. Die seitliche Ladeöffnung und die dachseitige Ladeöffnung erstrecken sich großflächig zwischen Rahmenelementen des Rahmenaufbaus. Das Dachelement ist über ein Gelenk verschwenkbar mit der Seitenwand verbunden. Die Gelenkachse zwischen dem Dachelement und der Seitenwand erstreckt sich vorzugsweise in Längsrichtung des Rahmenaufbaus. Durch die gelenkige Verbindung zwischen dem Dachelement und der Seitenwand wird das Dachelement gemeinsam mit der Seitenwand von der Schließ- in die Offenstellung gebracht. In der Offenstellung kann der Transportbehälter über die Dachöffnung und die seitliche Ladeöffnung beladen werden. Das Dachelement kann einteilig ausgebildet sein. Alternativ kann das Dachelement ein erstes und ein zweites Dachteil aufweisen.

Besonders bevorzugt ist es, wenn das obere und untere Seitenwandteil in der Offenstellung der Wandeinheit in einer zusammengeklappten Stellung auf der von der seitlichen Ladeöffnung abgewandten Längsseite des Rahmenaufbaus angeordnet sind. Vorzugsweise sind die Seitenwandteile in der Offenstellung neben dem Rahmenaufbau, d.h. nicht überlappend mit der Dachöffnung, angeordnet. Vorteilhafterweise kann so eine großflächige Dachöffnung freigegeben werden, wobei die Seitenwand die Beladung des Transportbehälters nicht behindert.

Wenn die Seitenwand in der Offenstellung der Wandeinheit zumindest teilweise, vorzugsweise um mehr als die halbe Höhe der Seitenwand, unterhalb des Dachbereichs auf der von der seitlichen Ladeöffnung abgewandten Längsseite des Rahmenaufbaus angeordnet ist, kann die Gesamthöhe des Transportbehälters in der Offenstellung wesentlich reduziert werden. Dies hat beispielsweise den Vorteil, dass der Transportbehälter in der Offenstellung der Wandeinheit einfacher und selbst bei beschränkter Höhe des Transportwegs bewegt werden kann. Zudem können die Lasten auf die Öffnungseinrichtung in der Offenstellung reduziert werden. Bevorzugt ist die Seitenwand, bezogen auf deren Zustand in der Offenstellung, um mehr als deren halbe Höhe, definiert als Erstreckung in vertikaler Richtung, unterhalb der Oberseite des Rahmenaufbaus angeordnet. Je nach Ausführung kann die Seitenwand bzw. können die Seitenwandteile in der Offenstellung im Wesentlichen senkrecht oder in einem Winkel zur Vertikalen angeordnet sein.

Die Erfindung wird nachstehend anhand in der Zeichnung dargestellter Ausführungsbeispiele, auf die sie jedoch nicht beschränkt ist, weiter erläutert. In der Zeichnung zeigen:
Fig. 1, 2 Ansichten eines Transportbehälters mit einer Wandeinheit gemäß einer ersten erfindungsgemäßen Ausführungsvariante in der Schließstellung;
Fig. 3 eine Detailansicht eines oberen Eckbereichs des Transportbehälters gemäß Fig. 1, 2 in der Schließstellung;
Fig. 4, 5 Ansichten des Transportbehälters gemäß Fig. 1 bis 3 in einer ersten Zwischenstellung beim Überführen der Wandeinheit von der Schließstellung in die Offenstellung;
Fig. 6 eine Ansicht des Transportbehälters gemäß Fig. 1 bis 5 in einer zweiten Zwischenstellung, welche beim Öffnungsvorgang auf die erste Zwischenstellung folgt;
Fig. 7 eine Ansicht des Transportbehälters gemäß Fig. 1 bis 5 in einer dritten Zwischenstellung, welche beim Öffnungsvorgang auf die zweite Zwischenstellung folgt;
Fig. 8 eine Ansicht des Transportbehälters gemäß Fig. 1 bis 5 in einer vierten Zwischenstellung, welche beim Öffnungsvorgang auf die dritte Zwischenstellung folgt;
Fig. 9 bis 11 Ansichten des Transportbehälters gemäß Fig. 1 bis 8 in der Offenstellung;
Fig. 12 eine Ansicht eines Transportbehälters gemäß einer zweiten erfindungsgemäßen Ausführungsvariante in der Schließstellung;
Fig. 13, 14 Ansichten des Transportbehälters gemäß Fig. 12 in aufeinanderfolgenden Zwischenstellungen;
Fig. 15, 16 Ansichten des Transportbehälters gemäß Fig. 12 bis 14 in der Offenstellung;
Fig. 17 eine Ansicht einer weiteren erfindungsgemäßen Ausführung des Transportbehälters in einer Zwischenstellung zwischen der Schließ- und der Offenstellung; und
Fig. 18 eine Ansicht des Transportbehälters gemäß Fig. 17 in der Offenstellung.

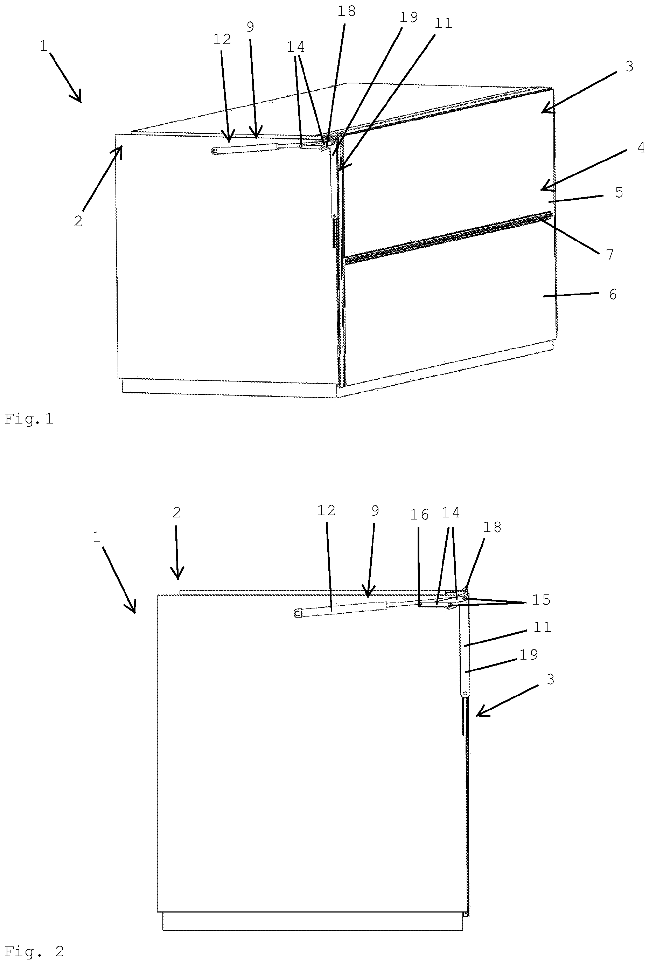

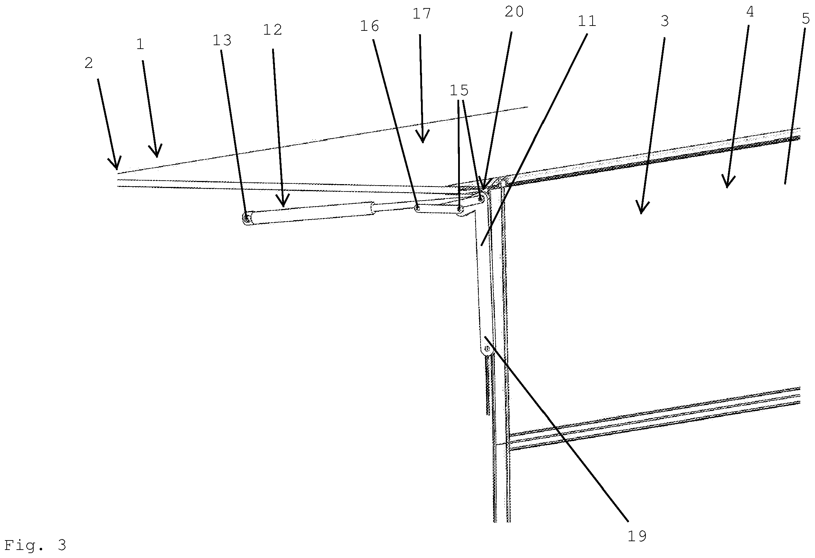

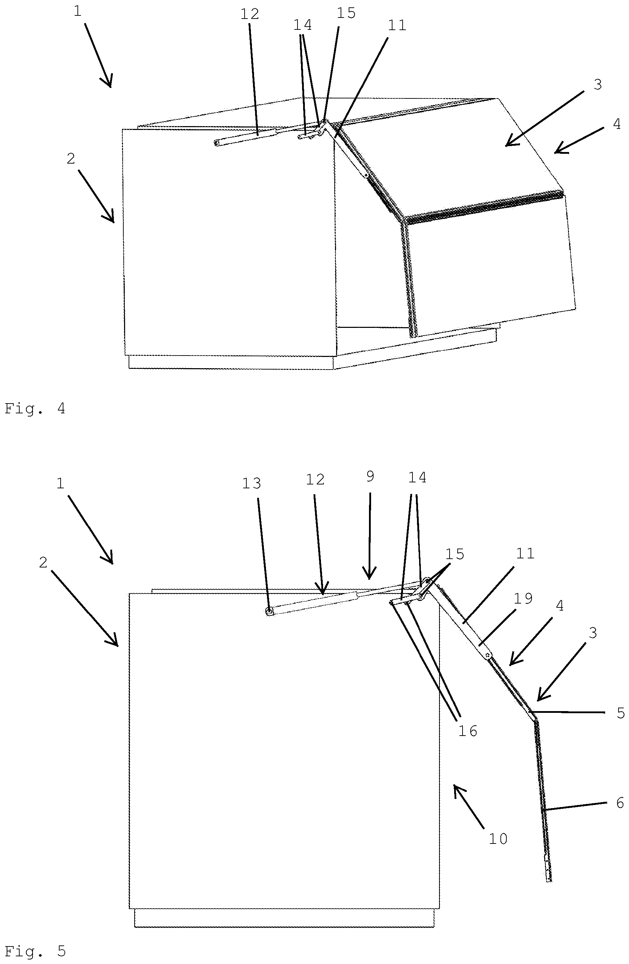

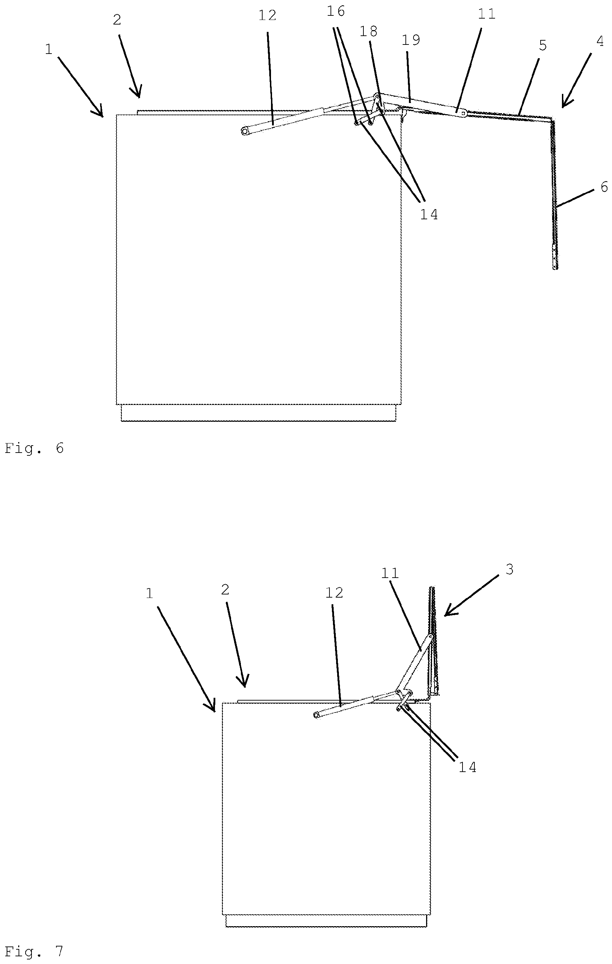

In Fig. 1 bis 10 ist schematisch ein im Wesentlichen quaderförmiger Transportbehälter 1 gezeigt, der insbesondere als Fahrzeugaufbau für einen Lastkraftwagen (nicht gezeigt) ausgebildet ist. Der Transportbehälter 1 weist einen in den Zeichnungen lediglich schematisch veranschaulichten Rahmenaufbau 2 mit horizontal und vertikal angeordneten Rahmenteilen auf. Der Rahmenaufbau 2 des Transportbehälters 1 schließt einen Transportraum zur Aufbewahrung von Transportgut ein. Der Rahmenaufbau 2 ist mit einer Wandeinheit bzw. einem Wandaufbau 3 verbunden, welcher eine Seitenwand 4 aufweist. Die Seitenwand 4 besteht aus einem oberen Seitenwandteil 5 und einem unteren Seitenwandteil 6, wobei das obere Seitenwandteil 9 über eine (bezogen auf die Betriebsstellung) im Wesentlichen horizontale Schwenkachse 7 mit dem unteren Seitenwandteil 6 verbunden ist. Das untere Ende des unteren Seitenwandteils 6 kann über eine (nicht gezeigte) Lenkeinrichtung mit dem Rahmenaufbau verbunden sein. Das obere Seitenwandteil 5 und das untere Seitenwandteil 6 sind jeweils als vollflächige Paneele ausgebildet. Darüber hinaus ist das obere Seitenwandteil 5 über eine ortsfeste Schwenkachse 8 schwenkbar am Rahmenaufbau 2 gelagert. Die ortsfeste Schwenkachse 8 erstreckt sich in einer horizontalen Ebene in Längsrichtung des Transportbehälters 1.

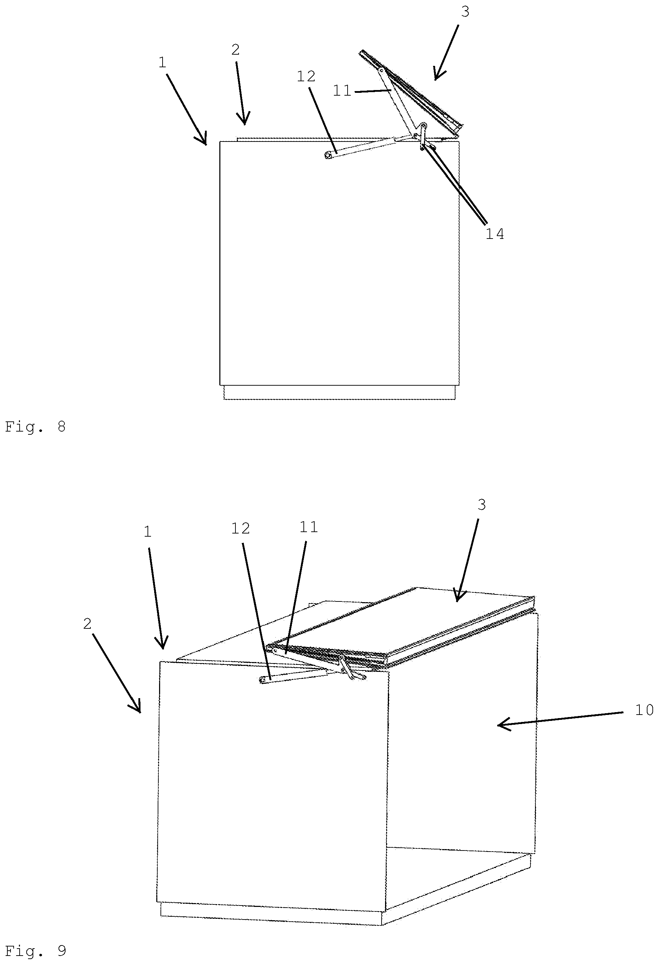

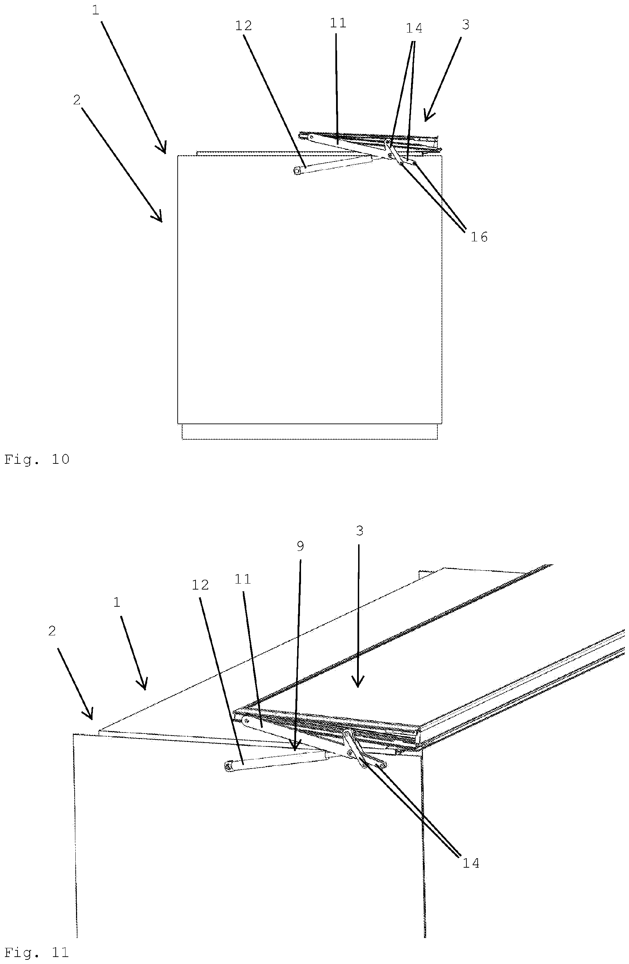

Wie aus Fig. 1, 2 weiters ersichtlich, ist zudem eine Öffnungseinrichtung 9 zum Überführen der Wandeinheit 3 zwischen einer flach am Rahmenaufbau 2 anliegenden Schließstellung (vgl. Fig. 1, 2), in welcher eine seitliche Ladeöffnung 10 des Rahmenaufbaus 2 durch die Seitenwand 4 verschlossen ist, und einer die seitliche Ladeöffnung 10 freigebenden Offenstellung (vgl. Fig. 9, 10) vorgesehen. Die Öffnungseinrichtung 9 weist einen Hubarm 11 auf, welcher gelenkig an einem Seitenrand der Seitenwand 4 gelagert ist. Darüber hinaus weist die Öffnungseinrichtung 9 einen Antrieb 12 zur Drehmomentübertragung auf den Wandaufbau 3 auf. Der Antrieb 10 ist als Linearantrieb in Form eines hydraulischen oder pneumatischen Zylinder-Kolben-Antriebs ausgebildet. Der Antrieb 12 ist am einen Ende um eine ortsfeste Schwenkachse 13 verschwenkbar am Rahmenaufbau 2 gelagert. Am anderen Ende greift der Antrieb 12 am Hubarm 11 an.

Wie aus Fig. 1 bis 10 ersichtlich, ist der Hubarm 11 mittels eines Paars von Schwenkarmen 14 mit dem Rahmenaufbau 2 verbunden, mit welchen der Hubarm 11 während der Öffnungs- bzw. Schließbewegung der Wandeinheit 3 derart geführt wird, dass der Hubarm 11 und damit die Seitenwand 4 um mehr als 180° verschwenkt werden kann. In der gezeigten Ausführung ist der Hubarm 11 zwischen der Schließstellung und der Offenstellung der Wandeinheit 3 um einen Winkel von mehr als 245° verschwenkbar. Zu diesem Zweck ist der Hubarm 11 über Gelenke 15 gelenkig mit den einen Enden der Schwenkarme 14 verbunden, deren andere Enden über ortsfeste Gelenke 16 gelenkig mit dem Rahmenaufbau 2 verbunden sind.

Wie aus Fig. 1 bis 10 weiters ersichtlich, sind die Gelenke 15 zwischen den Schwenkarmen 14 und dem Hubarm 11 einerseits und die Gelenke 16 zwischen den Schwenkarmen 14 und dem Rahmenaufbau 2 andererseits jeweils in einem Abstand zueinander angeordnet. Die Gelenke 16 zwischen den Schwenkarmen 14 und dem Rahmenaufbau 2 sind im Wesentlichen in derselben horizontalen Ebene, senkrecht zur Längsrichtung des Transportbehälters 1 voneinander beabstandet. In der gezeigten Ausführung befinden sich die ortsfesten Gelenke 16 der Schwenkarme 14 auf Seite des Rahmenaufbaus 2 an einem Dachbereich 17 des Rahmenaufbaus 2.

Wie aus Fig. 1 bis 10 weiters ersichtlich, bilden die Schwenkarme 14 zusammen ein Gestänge, mit welchem der Hubarm 11 beim Öffnungs- bzw. Schließvorgang entlang zweier Kreisbahnen geführt wird, um eine Kollision mit dem Dachbereich 17 des Rahmenaufbaus 2 zu verhindern. Die Gelenke 16 der Schwenkarme 14 am Rahmenaufbau 2 sind derart voneinander beabstandet, dass die Schwenkarme 14 in einer Zwischenstellung zwischen der Schließ- und der Offenstellung der Wandeinheit 3 über Kreuz angeordnet sind.

Wie aus Fig. 1 bis 10 weiters ersichtlich, weist der Hubarm 11 zwei in einem spitzen Winkel zueinander angeordnete Hubarmschenkel 18, 19 auf, so dass ein L-förmiger Hubarm 11 gebildet wird. Der Hubarmschenkel 18 ist an den Schwenkarmen 14 angelenkt. Der Hubarmschenkel 19 ist gelenkig mit dem Seitenrand der Seitenwand 4 verbunden. In der gezeigten Ausführung ist der mit der Wandeinheit 3 verbundene Hubarmschenkel 19 um ein Mehrfaches länger als der mit den Schwenkarmen 14 verbundene Hubarmschenkel 18. In der Schließstellung der Seitenwand 4 ist der Hubarmschenkel 19 im Wesentlichen parallel zur Haupterstreckungsebene der Seitenwand 4, d.h. im Wesentlichen vertikal, und der Hubarmschenkel 18 im Wesentlichen senkrecht zur Haupterstreckungsebene der Seitenwand 4, d.h. im Wesentlichen horizontal, angeordnet.

Wie aus Fig. 1 bis 10 weiters ersichtlich, ist einer der Schwenkarme 14 am freien Ende des Hubarmschenkels 18 angelenkt. Der weitere Schwenkarm 14 ist im Bereich eines die Hubarmschenkel 18 miteinander verbindenden Scheitels 20 des Hubarms 11 angelenkt. In der gezeigten Ausführung ist der Antrieb 12 am einen Ende um das Gelenk 15 am Scheitel 20 des Hubarms 11 und am anderen Ende um das Gelenk 13 am Rahmenaufbau 2 verschwenkbar gelagert.

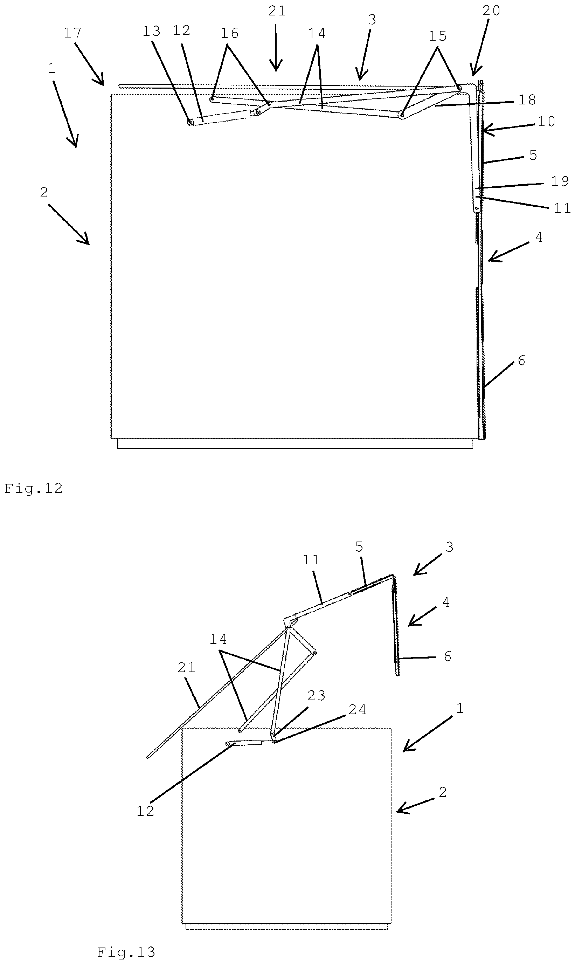

In den Fig. 12 bis 16 ist eine alternative Ausgestaltung des Transportbehälters 1 gezeigt, wobei nachstehend lediglich auf die Unterschiede zur Ausführungsform der Fig. 1 bis 11 einzugehen ist.

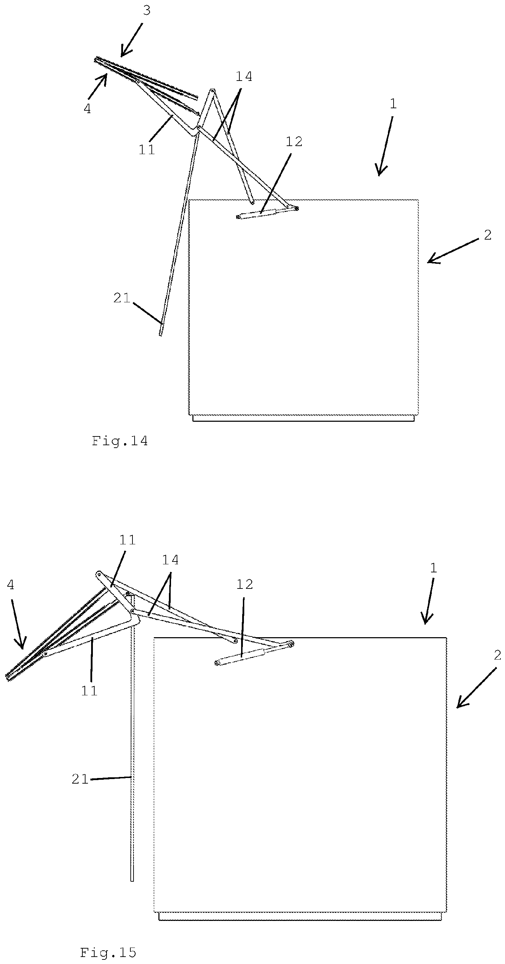

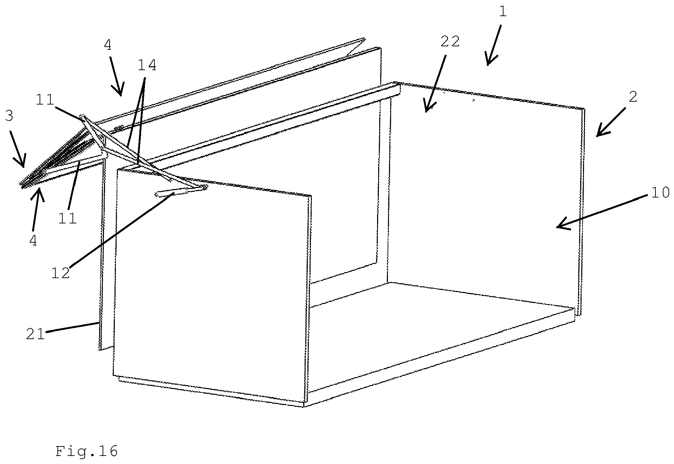

Beim Transportbehälter 1 der Fig. 12 bis 16 weist die Wandeinheit 3 ein gelenkig mit der Seitenwand 4 verbundenes Dachelement 21 auf. In der gezeigten Ausführung ist das Dachelement 21 einteilig ausgebildet. Das Dachelement 21 kann jedoch ein erstes und ein zweites Dachteil aufweisen, welche gelenkig miteinander verbunden sind (nicht gezeigt). In der Schließstellung der Wandeinheit 3 gemäß Fig. 12 ist das Dachelement 21 im Wesentlichen horizontal angeordnet, wobei eine oberseitige, in horizontaler Ebene erstreckte Dachöffnung 22 des Rahmenaufbaus 2 abgedeckt ist. In der Offenstellung der Wandeinheit 3 (vgl. Fig. 15, 16) liegt die Dachöffnung 22 frei, so dass der Transportbehälter 1 einerseits über die seitliche Ladeöffnung 10 und andererseits über die Dachöffnung 22 beladen werden kann.

In der gezeigten Ausführung weist einer der Schwenkarme 14 auf der vom Hubarm 11 abgewandten Seite des Gelenks 16 am Rahmenaufbau 2 einen Anlenkabschnitt 23 auf, welcher über ein Gelenk 24 mit dem Antrieb 12 verbunden ist. Somit wird vom Antrieb 12 über den Schwenkarm 14 mit dem Anlenkabschnitt 23 ein Drehmoment auf den Hubarm 11 übertragen, welcher an der Seitenwand 4 angelenkt ist. Bei dieser Ausführung erfolgt daher eine indirekte Kraftübertragung von dem Antrieb 12 über den Schwenkarm 14 mit dem Anlenkabschnitt 23 auf den Hubarm 11.

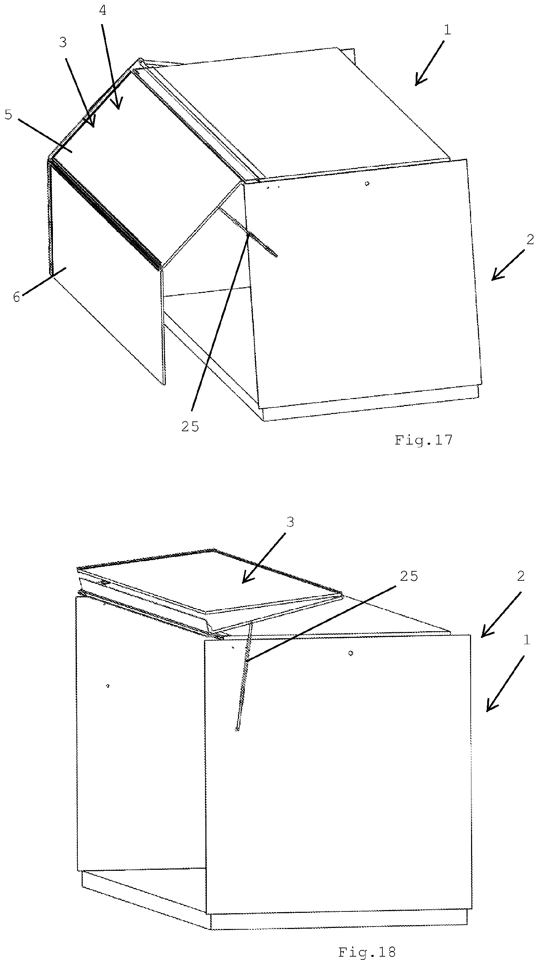

Wie aus Fig. 18, 19 ersichtlich, sind das obere 5 und untere Seitenwandteil 6 in der Offenstellung der Wandeinheit in einer zusammengeklappten, d.h. flach aufeinanderliegenden, Stellung auf der von der seitlichen Ladeöffnung 10 abgewandten Längsseite des Rahmenaufbaus 2 angeordnet. Die Seitenwand 4 befindet sich in der Offenstellung der Wandeinheit 3 teilweise, insbesondere um mehr als die halbe Höhe, unterhalb des Dachbereichs 17 auf der von der seitlichen Ladeöffnung 10 abgewandten Längsseite des Rahmenaufbaus 2.

In den Fig. 17, 18 ist eine weitere Ausführungsform des Transportbehälters 1 gezeigt, wobei nachstehend lediglich die Unterschiede zur Ausführungsform der Fig. 1 bis 11 erläutert werden sollen. Bei der Ausführung der Fig. 16, 17 ist ein Federelement 25 gelenkig zwischen dem Rahmenaufbau 2 und der Wandeinheit 3 angeordnet. Das Federelement 25 wird bei Erreichen der Schließstellung gespannt, so dass die gespeicherte Energie für die Einleitung des Öffnungsvorgangs zur Verfügung steht. Dementsprechend wird das Federelement 25 bei Erreichen der Offenstellung (vgl. Fig. 18) gespannt, so dass die gespeicherte Energie für die Einleitung des Schließvorgangs zur Verfügung steht. Als Federelement 25 ist in der gezeigten Ausführung eine Druckfeder vorgesehen, welche durch eine Schraubenfeder gebildet ist. Das Federelement 25 ist an der vorderen Stirnseite des Transportbehälters 1 angeordnet. Die Öffnungseinrichtung ist an der hinteren Stirnseite des Transportbehälters 1 angeordnet.

## Patentansprüche

1. Transportbehälter (1), insbesondere Fahrzeugaufbau oder Container, mit einem einen Transportraum einschließenden Rahmenaufbau (2), mit einer mit dem Rahmenaufbau (2) verbundenen Wandeinheit (3), welche eine Seitenwand (4) aufweist, und mit einer Öffnungseinrichtung (9) zum Überführen der Wandeinheit (3) zwischen einer am Rahmenaufbau (2) anliegenden Schließstellung, in welcher eine seitliche Ladeöffnung (10) des Rahmenaufbaus (2) durch die Seitenwand (4) verschlossen ist, und einer die seitliche Ladeöffnung (10) freigebenden Offenstellung, wobei die Öffnungseinrichtung (9) einen gelenkig mit der Wandeinheit (3) verbundenen Hubarm (11) aufweist, wobei der Hubarm (11) über zwei Schwenkarme (14) mit dem Rahmenaufbau (3) verbunden ist, wobei erste Gelenke (15) zwischen den Schwenkarmen (14) und dem Hubarm (11) und zweite Gelenke (16) zwischen den Schwenkarmen (14) und dem Rahmenaufbau (2) vorgesehen sind, wobei die ersten Gelenke (15) zwischen den Schwenkarmen (14) und dem Hubarm (11) und die zweiten Gelenke (16) zwischen den Schwenkarmen (14) und dem Rahmenaufbau (2) jeweils in einem Abstand zueinander angeordnet sind, **dadurch gekennzeichnet, dass** die zweiten Gelenke (16) zwischen den Schwenkarmen (14) und dem Rahmenaufbau (2) im Wesentlichen in horizontaler Richtung, senkrecht zu deren Gelenkachsen voneinander beabstandet sind, wobei die zweiten Gelenke (16) zwischen den Schwenkarmen (14) und dem Rahmenaufbau (2) vorzugsweise im Wesentlichen in derselben horizontalen Ebene angeordnet sind und die ersten Gelenke (15) zwischen den Schwenkarmen (14) und dem Hubarm (11) und die zweiten Gelenke (16) zwischen den Schwenkarmen (14) und dem Rahmenaufbau (2) derart angeordnet sind, dass die Schwenkarme (14) bei der Überführung der Wandeinheit (3) von der Schließstellung in die Offenstellung ab- schnittsweise über Kreuz angeordnet sind.

2. Transportbehälter (1) nach Anspruch 1, **dadurch gekennzeichnet, dass** zweiten Gelenke (16) zwischen den Schwenkarmen und dem Rahmenaufbau an einem Dachbereich (17) des Rahmenaufbaus (2) angeordnet sind.

3. Transportbehälter (1) nach einem der Ansprüche 1 und 2, **dadurch gekennzeichnet, dass** der Hubarm (11) zwischen der Schließstellung und der Offenstellung der Wandeinheit (3) um einen Winkel von mehr als 225° verschwenkbar ist.

4. Transportbehälter (1) nach einem der Ansprüche 1 bis 3, **dadurch gekennzeichnet, dass** der Hubarm (11) zwei in einem Winkel, vorzugsweise in einem spitzen Winkel, zueinander angeordnete Hubarmschenkel (18, 19) aufweist, wobei der eine Hubarmschenkel (18) mit den Schwenkarmen (14) und der andere Hubarmschenkel (19) mit der Wandeinheit (3), insbesondere mit einem Seitenrand der Seitenwand (4), verbunden ist, wobei der mit der Wandeinheit (3) verbundene Hubarmschenkel (19) vorzugsweise eine größere Längserstreckung als der mit den Schwenkarmen (14) verbundene Hubarmschenkel (18) aufweist.

5. Transportbehälter (1) nach Anspruch 4, **dadurch gekennzeichnet, dass** der eine Schwenkarm (14) am freien Ende des einen Hubarmschenkels (18) angelenkt ist, wobei der andere Schwenkarm (14) bevorzugt im Bereich eines die Hubarmschenkel (18, 19) miteinander verbindenden Scheitels (20) des Hubarms (11) angelenkt ist.

6. Transportbehälter (1) nach einem der Ansprüche 4 bis 5, **dadurch gekennzeichnet, dass** der eine Hubarmschenkel (18) in der Schließstellung der Seitenwand im Wesentlichen parallel zur Haupterstreckungsebene der Seitenwand (4) und der andere Hubarmschenkel (19) im Wesentlichen senkrecht zur Haupterstreckungsebene der Seitenwand (4) angeordnet ist.

7. Transportbehälter (1) nach einem der vorhergehenden Ansprüche, **dadurch gekennzeichnet, dass** die Öffnungseinrichtung (9) einen Antrieb (12), insbesondere einen Linearantrieb, vorzugsweise einen Zylinder-KolbenAntrieb, zur Drehmomentübertragung auf den Hubarm (11) aufweist, wobei der Antrieb (12) am einen Ende um eines der ersten Gelenke (15) zwischen den Schwenkarmen (14) und dem Hubarm (11) und am anderen Ende um das zweite Gelenk (16) am Rahmenaufbau (2) gelagert ist.

8. Transportbehälter (1) nach einem der vorhergehenden Ansprüche, **dadurch gekennzeichnet, dass** ein Federelement (25) jeweils mit dem Rahmenaufbau (2) und der Wandeinheit (3) derart verbunden ist, dass das Federelement (25) in der Schließstellung und/oder in der Offenstellung der Wandeinheit (3) in einem gespannten Zustand vorliegt.

9. Transportbehälter (1) nach einem der vorhergehenden Ansprüche, **dadurch gekennzeichnet, dass** die Seitenwand (4) zumindest ein oberes Seitenwandteil (5) und ein unteres Seitenwandteil (6) aufweist, wobei das obere Seitenwandteil (5) über eine Schwenkachse (7) mit dem unteren Seitenwandteil (6) verbunden ist.

10. Transportbehälter (1) nach Anspruch 9, **dadurch gekennzeichnet, dass** die Seitenwand um eine ortsfeste Gelenkachse am Dachbereich (17) des Rahmenaufbaus (2) schwenkbar gelagert ist.

11. Transportbehälter (1) nach einem der vorhergehenden Ansprüche, **dadurch gekennzeichnet, dass** die Wandeinheit (3) ein gelenkig mit der Seitenwand (4) verbundenes Dachelement (21) aufweist, welches in der Schließstellung der Wandeinheit (3) eine Dachöffnung (22) des Rahmenaufbaus (2) abdeckt und die Dachöffnung (22) in der Offenstellung der Wandeinheit (3) freigibt.

12. Transportbehälter (1) nach Anspruch 11, **dadurch gekennzeichnet, dass** das obere (5) und untere Seitenwandteil (6) in der Offenstellung der Wandeinheit (3) in einer zusammengeklappten Stellung auf der von der seitlichen Ladeöffnung (10) abgewandten Längsseite des Rahmenaufbaus (2) angeordnet sind.

13. Transportbehälter (1) nach einem der vorhergehenden Ansprüche, **dadurch gekennzeichnet, dass** die Seitenwand (4) in der Offenstellung der Wandeinheit (3) zumindest teilweise, vorzugsweise um mehr als die halbe Höhe der Seitenwand (4), unterhalb des Dachbereichs (17) auf der von der seitlichen Ladeöffnung (10) abgewandten Längsseite des Rahmenaufbaus (2) angeordnet ist.

## Claims

1. Transport container (1), in particular vehicle body or receptacle, with a frame structure (2) enclosing a transport space, with a wall unit (3) which is connected to the frame structure (2) and which has a side wall (4), and with
an opening device (9) for transferring the wall unit (3) between a closure position bearing on the frame structure (2), in which closure position a lateral loading opening (10) of the frame structure (2) is closed by the side wall (4),
and an open position freeing the lateral loading opening (10), wherein the opening device (9) has a lifting arm (11) connected in a hinged manner to the wall unit (3). The lifting arm (11) is connected to the frame structure (3) via two pivot arms (14), wherein hinges (15) are provided between the pivot arms (14) and the lifting arm, and hinges (16) are provided between the pivot arms (14) and the frame structure (2), wherein the hinges (15) between the pivot arms (14) and the lifting arm (11) and the hinges (16) between the pivot arms (14) and the frame structure (2) are arranged at a distance from each other in each case,
**characterized in that** the second joints (16) between the second pivot arms (14) and the frame structure (2) essentially in the horizontal direction, perpendicularly to the hinge axes of which are spaced from one another, the second pivot arms (14) and the frame structure (2) being substantially in the horizontal direction, the second pivot arms (14) and the frame structure (2) being spaced from one another perpendicularly to their hinge axes, the second pivot arms (14) and the frame structure (2) being substantially in the horizontal direction.
Joints (16) between the pivot arms (14) and the frame structure (2) are preferably arranged substantially in the same horizontal plane and the first joints (15) between the pivot arms (14) and the lifting arm (11), and the second joints (16) are arranged between the pivot arms (14) and the frame structure (2) in such a way that the pivot arms (14) are arranged crosswise in sections when the wall unit (3) is transferred from the closed position into the open position.

2. Transport container (1) according to claim 1, **characterized in that** second joints (16) are arranged between the pivot arms and the frame structure on a roof region (17) of the frame structure (2).

3. Transport container (1) according to one of claims 1 and 2, **characterized in that** the lifting arm (11) is pivotable by an angle of more than 2250 between the closed position and the open position of the wall unit (3).

4. Transport container (1) according to one of claims 1 to 3, **characterized in that** the lifting arm (11) has two lifting arm legs (18, 19) arranged at an angle, preferably at an acute angle, to one another, one lifting arm leg (18) having the arms (14) and the other lifting arm leg (19) having the wall unit (3), in particular to a side edge of the side wall (4), the lifting arm leg (19) connected to the wall unit (3) preferably having a greater longitudinal extent than the lifting arm leg (18) connected to the pivot arms (14).

5. Transport container (1) according to Claim 4, **characterized in that** one arm (14) is articulated on the free end of one lifting arm leg (18), the other arm (14) preferably being articulated in the region of an apex (20) of the lifting arm (11) connecting the lifting arm legs (18, 19) to one another.

6. Transport container (1) according to one of claims 4 to 5, **characterized in that** one lifting arm leg (18) is arranged essentially parallel to the main extension plane of the side wall (4) in the closed position of the side wall and the other lifting arm leg (19) is arranged essentially perpendicular to the main extension plane of the side wall (4).

7. Transport container (1) according to one of the preceding claims, **characterized in that** the opening device (9) has a drive (12), in particular a linear drive, preferably a cylinder-piston drive, for torque transmission to the lifting arm (11), the drive (12) being mounted at one end about one of the first joints (15) between the arms (14) and the lifting arm (11) and at the other end about the second joint (16) on the frame structure (2).

8. Transport container (1) in accordance with one of the preceding claims, **characterized in that** a spring element (25) is connected in each case to the frame structure (2) and the wall unit (3) in such a way that the spring element (25) is in a tensioned state in the closed position and/or in the open position of the wall unit (3).

9. Transport container (1) according to one of the preceding claims, **characterized in that** the side wall (4) has at least one upper side wall part (5) and one lower side wall part (6), the upper side wall part (5) being connected to the lower side wall part (6) via a pivot axis (7).

10. Transport container (1) according to claim 9, **characterized in that** the side wall is mounted in a pivoting manner about a fixed pivot axis on the roof region (17) of the frame structure (2).

11. Transport container (1) according to one of the preceding claims, **characterized in that** the wall unit (3) has a roof element (21) which is connected in an articulated manner to the side wall (4) and, in the closed position of the wall unit (3), covers a roof opening (22) of the frame structure (2) and releases the roof opening (22) in the open position of the wall unit (3).

12. Transport container (1) according to claim 11, **characterised in that** the upper (5) and lower side wall part (6) are arranged in the open position of the wall unit (3) in a folded position on the longitudinal side of the frame structure (2) remote from the lateral loading opening (10).

13. Transport container (1) according to one of the preceding claims, **characterized in that**, in the open position of the wall unit (3), the side wall (4) is arranged at least partially, preferably by more than half the height of the side wall (4), below the roof region (17) on the longitudinal side of the frame structure (2) remote from the lateral loading opening (10).

## Revendications

1. L'invention concerne un conteneur de transport (1), en particulier une carrosserie sur châssis ou un conteneur, comprenant une structure de cadre (2) qui contient un espace de transport, une unité de paroi (3) reliée à la structure de cadre (2) et qui présente une paroi latérale (4), et un dispositif d'ouverture (9) pour transférer l'unité de paroi (3) entre une position de fermeture qui est en contact avec la structure de cadre (2) et dans laquelle une ouverture latérale de chargement (10) de la structure de cadre (2) est fermée via la paroi latérale (4) et une position ouverte libérant l'ouverture de chargement latérale (10), dans laquelle le dispositif d'ouverture (9) comportant un bras de levage (11) qui est raccordé de manière articulée à l'unité murale (3), le bras de levage (11) étant relié à la structure de cadre (3) via deux bras pivotants (14) où les premières
articulations (15) entre les bras pivotants (14)
et le bras de levage (11) et les secondes
articulations (16) entre les bras pivotants (14)
et la structure de cadre (2), dans laquelle les premières
articulations
(15) entre les bras pivotants (14) et le bras de levage (11) et les secondes articulations (16) entre les bras pivotants (14) et la structure de cadre (2) sont disposées à chaque fois à une certaine distance les unes des autres,
ceci étant **caractérisé en ce que** les deuxièmes
articulations (16) entre les
bras pivotants (14) et la structure de cadre (2) sont espacés sensiblement dans la direction horizontale perpendiculaire à leurs axes articulés où les deuxièmes
articulations (16) situées entre les bras pivotants (14) et la structure de cadre (2) sont disposées de préférence sensiblement dans le même plan horizontal et les premières articulations (15) situées
entre les bras pivotants (14), le bras de levage (11) et
les deuxièmes articulations (16) sont disposées entre les bras pivotants (14) et la structure de cadre (2) de telle sorte que, lors du transfert de l'unité de paroi (3) de la position de fermeture à la position ouverte, les bras pivotants (14) sont disposés en sections transversales.

2. Conteneur de transport (1) selon la revendication 1, **caractérisé en ce que** les secondes articulations (16) sont disposées entre les bras pivotants et la structure de cadre sur une zone de toit (17) de la structure de cadre (2).

3. Conteneur de transport (1) selon l'une des revendications 1 et 2, **caractérisé en ce que** le bras de levage (11) peut pivoter d'un angle supérieur à 225° entre la position de fermeture et la position ouverte de l'unité de paroi (3).

4. Conteneur de transport (1) selon l'une des revendications 1 à 3, **caractérisé en ce que** le bras de levage (11) présente deux branches de levage (18, 19) disposées suivant un angle, de préférence suivant un angle aigu, l'une des branches de levage (18) comportant les bras pivotants (14) et l'autre branche de levage (19) comportant la branche de levage, l'unité de paroi (3) étant reliée, en particulier à un bord latéral de la paroi latérale (4), la branche de bras de levage (19) reliée à l'unité de paroi (3) présentant de préférence une plus grande étendue longitudinale que la branche de bras de levage (18) reliée aux bras de pivotement (14).

5. Conteneur de transport (1) selon la revendication 4, **caractérisé en ce que** le bras pivotant (14) est articulé sur l'extrémité libre de l'une des branches de levage (18), l'autre bras pivotant (14) étant de préférence dans la zone d'un sommet (20) du bras de levage (11) reliant les branches de levage (18, 19)).

6. Conteneur de transport 1) selon l'une des revendications 4 à 5, **caractérisé en ce que** l'une des branches de levage (18) est disposée dans la position de fermeture de la paroi latérale sensiblement parallèle au plan d'extension principal de la paroi latérale (4) et l'autre branche de levage (19) est disposée de manière sensiblement perpendiculaire au plan d'extension principal de la paroi latérale (4).

7. Conteneur de transport (1) selon l'une des revendications précédentes, **caractérisé en ce que** le dispositif d'ouverture (9) présente un entrainement (12), en particulier un entrainement linéaire, de préférence un entrainement à piston-cylindre, pour la transmission du couple sur le bras de levage (11), l'entrainement (12) présentant à une extrémité autour d'une des premières articulations (15) entre les bras de pivotement (1) 14) et le bras de levage (11) et à l'autre extrémité, sont montés sur la structure de cadre (2) autour de la deuxième articulation (16).

8. Conteneur de transport (1) selon l'une des revendications précédentes, **caractérisé en ce qu'**un élément élastique (25) est relié à chaque fois à la structure de cadre (2) et à l'unité de paroi (3) de telle sorte que l'élément élastique (25) se trouve dans un état tendu dans la position de fermeture et/ou dans la position ouverte de l'unité de paroi (3).

9. Conteneur de transport (1) selon l'une des revendications précédentes, **caractérisé en ce que** la paroi latérale (4) présente au moins une partie de paroi latérale supérieure (5) et une partie de paroi latérale inférieure (6), la partie de paroi latérale supérieure (5) étant reliée à la partie de paroi latérale inférieure (6) par l'intermédiaire d'un axe de pivotement (7).

10. Conteneur de transport (1) selon la revendication 9, **caractérisé en ce que** la paroi latérale est montée pivotante autour d'un axe d'articulation fixe sur la zone de toit (17) de la structure de cadre (2).

11. Conteneur de transport (1) selon l'une des revendications précédentes, **caractérisé en ce que** l'unité de paroi (3) présente un élément de toit (21) relié de manière articulée à la paroi latérale (4), qui, dans la position de fermeture de l'unité de paroi (3), recouvre une ouverture de toit (22) de la structure de cadre (2) et dégage l'ouverture de toit (22) dans la position d'ouverture de l'unité de paroi (3).

12. Conteneur de transport (1) selon la revendication 11, **caractérisé en ce que** les parties de paroi latérale supérieure (5) et inférieure (6) sont disposées dans la position ouverte de l'unité de paroi (3) dans une position repliée sur le côté longitudinal de la structure de cadre (2) opposé à l'ouverture de chargement latérale (10).

13. Conteneur de transport (1) selon l'une des revendications précédentes, **caractérisé en ce que** la paroi latérale (4) est disposée, dans la position ouverte de l'unité de paroi (3), au moins partiellement, de préférence de plus de la moitié de la hauteur de la paroi latérale (4), au-dessous de la zone de toit (17), sur le côté longitudinal de la structure de cadre (2) opposé à l'ouverture de chargement latérale (10).
